# FASCICULE DE BREVET EUROPEEN

(11) **EP 3 874 368 B1**
(45) Date de publication et mention de la délivrance du brevet: **24.07.2024**
(21) Numéro de dépôt: 19797208.6
(22) Date de dépôt: 25.10.2019
(51) Int. Cl.: G06F 9/455

(54) **EXECUTER DES PORTIONS DE CODE SUR DES RESSOURCES D´EXECUTION**
AUSFÜHRUNG VON CODE-TEILEN AUF AUSFÜHRUNGSRESSOURCEN
EXECUTING PORTIONS OF CODE ON EXECUTION RESOURCES

(30) Priorité: 31.10.2018 FR 1860069
(43) Date de publication de la demande: 08.09.2021
(73) Titulaire: Scaledynamics, 35530 Brece (FR)
(72) Inventeur: CABILLIC, Gilbert, 35530 BRECE (FR); LESOT, Jean-Philippe, 35370 ARGENTRE-DU-PLESSIS (FR)
(74) Mandataire: Vidon Brevets & Stratégie
(86) Numéro de dépôt international: PCT/EP2019/079179
(87) Numéro de publication internationale: WO 2020/089076

(56) Documents cités:
- ANONYMOUS: "javascript - WebWorkers and Asynchronous shared data access. How in Scala.js? - Stack Overflow", 22 May 2018 (2018-05-22), XP055601842, Retrieved from the Internet <URL:https://web.archive.org/web/20180522041746/https://stackoverflow.com/questions/49951842/webworkers-and-asynchronous-shared-data-access-how-in-scala-js> [retrieved on 20190703]

## Description

### 1. Domaine

L'invention se rapporte au domaine du traitement de code informatique. L'invention se rapporte plus particulièrement au traitement de codes appelés scripté. Il s'agit de code interprétable et/ou exécutable par l'intermédiaire d'une machine virtuelle ou d'un interpréteur. Plus spécifiquement encore, le domaine de l'invention est celui de l'optimisation de l'exécution de code scripté au sien d'un environnement d'exécution dynamique.

### 2. Art Antérieur

Il est fréquent, notamment dans un cadre institutionnel ou en entreprise, de disposer d'architectures de systèmes d'information complexes, impliquant la mise en oeuvre de nombreux dispositifs (ordinateurs, serveurs, dispositifs mobiles), interconnectés par un ou plusieurs réseaux de communications. Au sein de telles organisations, le nombre de dispositifs connectés entre eux ne cesse de croître et la maintenance de ces architectures matérielles et logicielles coûte chère. Pour tenter d'économiser sur ces coûts, les entreprises font également appel à des services dit de « cloud », afin par exemple de mettre en oeuvre des solutions de type SaaS (de l'anglais pour « Software as a Service ») ou AaaS (de l'anglais pour « Application as a Service »). Bien que pouvant effectivement limiter les coûts de maintenance liés à des architecture détenues en propre, ces solutions ne sont pas exemptes d'autres contraintes (notamment au niveau de la sécurisation des données ou de la performance).

Pour ce qui est de la performance, quelle que soit la solution retenue par l'organisation, celle-ci est souvent appréciée à l'aune des attentes des utilisateurs. Lorsque l'organisation possède son infrastructure, le besoin en performance, notamment pour l'exécution d'application serveur ou client-serveur, nécessite l'achat de matériels toujours plus puissants, disposants de toujours plus de ressources (processeurs, quantité de mémoire, disques rapides), afin de répondre aux besoins rencontrés par les utilisateurs.

Or il se trouve que bien que certaines applications ou certains programmes sont effectivement en mesure d'utiliser pleinement les ressources mises à disposition par les nouveaux matériels, d'autres en sont souvent incapables. En effet, les programmes et applications peuvent être divisés en deux grandes catégories (dans la suite on ne parle plus que de programmes). La première est celle des programmes compilés ; Il s'agit de programmes dont le code source (par exemple écrit dans le langage C, C#, C++, Pascal, etc.) est transformé, par l'utilisation d'un ou plusieurs compilateur et/ou un ou plusieurs optimiseurs en un code exécutable pour une plateforme donnée (une plateforme s'entendant comme une architecture de processeur et/ou un système d'exploitation). Ces programmes compilés sont efficaces en ce qu'ils sont capables de tirer parti de l'ensemble des ressources fournies par la plateforme sur laquelle ils s'exécutent. Cette efficacité tire son origine sur les nombreux travaux publiés permettant d'optimiser un code binaire en fonction des plateformes de destination (par exemple utilisation de tous les coeurs de processeur disponible, parallélisation, utilisation commune de la mémoire, etc.).

La deuxième catégorie est celle des programmes interprétés ; il s'agit de programmes dont le code source est interprété avant d'être exécuté. Parmi les langages de programmation populaires de ce type on trouve par exemple le PHP, le Javascript, ou encore le *bytecode* Java. Dans le cadre de l'invention, on utilise le terme code scripté pour se référer au code d'un programme écrit dans un langage de ce type. L'avantage des programmes écrits dans ces langages est qu'ils sont multiplateformes : le code scripté du programme s'exécute de la même manière sur différents types de plateforme. Seul l'interpréteur est optimisé pour une plateforme donnée. Ceci facilite grandement la diffusion des programmes. En revanche, les performances de ce type de programme sont souvent moins bonnes que celles des programmes binaires, même en réalisant une compilation dynamique. Et pour cause, bien que de nombreux travaux aient été conduits pour améliorer le fonctionnement des interpréteurs et des machines virtuelles, ceux-ci n'ont pas toujours conduits à des résultats totalement satisfaisants.

Par exemple, le langage javascript permet d'écrire des programmes (scripts) qui sont exécutés par un moteur Javascript (ou interpréteur Javascript). Un tel moteur est soit intégré au sein d'un navigateur Web (Firefox^{™}, Chrome^{™}, Edge^{™}, Opéra ^{™}), soit mis en oeuvre séparément au sein d'un interpréteur dédié (par exemple Node.js^{™}). Comme pour d'autres langages, le code javascript est historiquement un langage s'exécutant dans un environnement mono-thread (c'est-à-dire que tous les événements s'effectuent les uns après les autres). Lorsqu'une fonction longue est mise en oeuvre par l'interpréteur, celui-ci n'est pas nécessairement disponible pour effectuer d'autres tâches tant que la fonction n'est pas terminée. Bien entendu, avec les récentes évolutions intégrées au sein des interpréteurs, il est possible de créer des flots d'exécution isolés via des interfaces disponibles (par exemple les *« webworkers »* dans les navigateurs) ou dans Node.js *(webworkers, child.spawn*/*fork*)*.* Ainsi, des solutions existent théoriquement pour réaliser un appel de fonction déporté au sein d'un flot d'exécution différent du flot principal. Cependant, la problématique principale réside dans la portée du code exécuté dans un autre flot d'exécution. En effet, pour pouvoir fonctionner correctement, ces solutions existantes, telles que celles mentionnées précédemment doivent être intégrées au sein du code source scripté lors de son écriture par le développeur. Par exemple, l'appel à un *webworker* doit être prévu à l'avance par le développeur du programme qui doit donc savoir, en avance de phase, que le programme est susceptible de s'exécuter sur une longue période et qu'il est donc nécessaire de prévoir un ou plusieurs flots d'exécution pour l'exécution du programme. Chaque flot d'exécution *(chaque webworker)* implémente un code qui lui est propre (et défini par un fichier javascript particulier). Il n'y a donc pas de dynamicité de la création d'un webworker et encore moins de répartition dynamique de charge. Par ailleurs, les flots d'exécution sont indépendants les uns des autres. Cela signifie que ces dernières ne permettent pas de gérer à la fois la correspondance des objets entre appelant et appelé car les solutions existantes effectuent des recopies d'objets (lorsqu'elles en effectuent), et ne permettent pas non plus de gérer l'étendue de l'applicabilité des variables et des fonctions au sein des différents flots d'exécution. La discussion d'un forum sur internet "javascript-WebWorkers and Asynchronous shared data access. How in Scala.js? - Stack Overflow",url: https://stackoverflow.com/ questions/49951842/webworkers-and-asynchronous-shared-data-access-how-in-scala-js, datant du 22 mai 2018 [extrait le 03-07-2019] décrit le traitement de grands ensembles de données par des Webworkers. Dans ce document il est question du traitement par le Webworker, d'une classe Scala.js qui contient un grand tableau de type en JavaScript appelé xArr. Un tel tableau est un tableau de valeurs. L'auteur de la question sur le forum se demande comment résoudre la problématique de temps de traitement des données se trouvant à l'intérieur de ce tableau tout en permettant un accès à ce tableau.

Il existe donc un besoin de fournir une solution qui ne pose pas les problèmes précédemment mentionnés et permette de tirer parti de plus de ressource disponible au sein des infrastructures de traitement de l'information.

### 3. Résumé

La méthode proposée par les inventeurs ne pose pas ces problèmes de l'art antérieur. En effet, il est proposé un procédé d'exécution d'un code scripté d'une application, procédé mis en oeuvre par l'intermédiaire d'un dispositif électronique, appelé ressource appelante (ResA, A), au sein de laquelle ladite application est exécutable. Selon l'invention, un tel procédé comprend :
- une étape d'obtention (20) du code scripté de l'application (PCP) comprenant un ensemble d'objets projetables, un objet projetable de l'ensemble d'objets projetables comprenant au moins une fonction exécutable auprès d'une ressource d'exécution de destination (resX, B) ;
- une étape de préparation d'une structure de données de transmission (PCP#, heap) d'au moins un objet projetable dudit code scripté préalablement obtenu, ladite structure de données de transmission associant à chaque objet projetable du code scripté, au moins une donnée d'indexation ;
- une étape de transmission (40), à une ressource d'exécution de destination, de la structure de données de transmission (PCP#, heap) du code scripté; *et* postérieurement à l'exécution (50), par la ressource d'exécution de destination, d'au moins une fonction dudit au moins un objet projetable de la structure de données de transmission :
   - une étape de réception (60) d'une structure de données (ExObj, diff) de résultats d'exécution de ladite au moins une fonction ;
   - une étape d'intégration de résultats d'exécution de la structure de données de résultats d'exécution au sein de la ressource appelante .

Ainsi, l'invention rend possible l'exécution, sur de multiples ressources, d'un code source scripté, sans nécessiter, sur les ressources distantes (ressource d'exécution de destination), la mise en oeuvre d'un processus différent de celui mis en oeuvre usuellement pour l'exécution d'un code scripté par l'une de ces ressources d'exécution de destination. Ainsi, dans au moins un mode de réalisation, l'invention permet d'effectuer une exécution de code scripté « réparti » sur plusieurs ressources d'exécution. La transmission, à la ressource de destination, de l'ensemble du code scripté n'a dès lors pas d'objet. Il faut et il suffit de transmettre une portion indépendante et exécutable de manière autonome pour mettre en oeuvre la technique décrite, ce qui simplifie la répartition des traitements. Par ailleurs, la structure de données de transmission associe à chaque objet projetable du code scripté, une donnée d'indexation, entendu une donnée d'indexation de l'objet projetable. La préparation de la structure de données de transmission comprend notamment l'indexation des objets transmis.

Selon une caractéristique particulière, l'étape d'intégration de résultats d'exécution de la structure de données de résultats d'exécution au sein de la ressource appelante comprend une vérification différentielle de l'intégrité des données mise à jour au cours de l'exécution (50), par la ressource d'exécution de destination.

Ainsi, il est possible, au sein de la ressource appelante, de s'assurer que les résultats d'exécution distants ne viennent pas en opposition avec d'autres ressources (locales ou de destination) qui auraient pu modifier les mêmes données préalablement à la réception de ces données modifiées par la ressource d'exécution de destination. On évite donc ainsi de propager ou d'intégrer des incohérences dans les données traitées lorsque celles-ci sont au moins partiellement traitées à distance.

Selon une caractéristique particulière, l'étape d'obtention du code scripté comprenant un ensemble d'objets projetables comprend :
- une étape d'obtention (10) d'un code source scripté (CSSE), représentatif de l'application à exécuter par la ressource appelante (ResA, A) ;
- une étape de détermination, au sein du code source scripté (CSSE), d'au moins une fonction susceptible d'être exécutée par une ressource d'exécution de destination, dite fonction projetable ;
- une étape de modification du code source scripté, délivrant un code scripté d'exécution comprenant ledit ensemble d'objets projetables, en fonction de ladite au moins une fonction projetable préalablement déterminée.

Ainsi, le code source scripté n'est pas directement transmis aux ressources pour être exécuté. A la place, il est analysé de manière à déterminer quelles sont les portions de code qui sont susceptibles d'être projetées vers des ressource d'exécution de destination, éventuellement en modifiant le code source scripté lui-même.

Selon un mode de réalisation particulier, l'étape de préparation d'une structure de données de transmission d'au moins un objet projetable dudit code scripté comprend :
- une étape de création d'un tableau d'indexation (ref_{A}), pour chaque objet projetable (OA, XA) à transmettre à une ressource d'exécution de destination (ResX, B), tableau au sein duquel un index (0, 1, ...) est associé à une référence d'objet (RefOA, RefXA,...) ;
- une étape de création de la structure de données de transmission (PCP, heap) sous la forme d'un tableau comprenant, pour chaque objet projetable, un index (0, 1, ...), correspondant à l'index (0, 1, ...) de la référence de cet objet projetable au sein du tableau d'indexation (ref_{A}), et une représentation sérialisée (r0, r1, ...) de l'objet projetable ;

Ainsi, en utilisant deux structures de données différentes, du côté de la ressource appelante, pour indexer le code scripté d'exécution qui est transmis, on assure qu'il est possible, lorsque le code exécuté par la ressource destination est terminé, de retrouver une correspondance d'objet identique à celle qui a été transmise, et donc on permet une vérification des données reçues en provenance de la ressource d'exécution de destination.

Selon un mode de réalisation particulier l'étape de réception d'une structure de données de résultats (ExObj, diff) d'exécution de ladite au moins une fonction comprend :
- une étape de réception, de la structure de données de transmission (PCP#, heap) préalablement transmise, sous la forme d'un tableau comprenant, pour chaque objet projetable, un index (0, 1, 2,...), correspondant à l'index (0, 1, 2,...) de la référence de cet objet projetable au sein d'un tableau d'indexation (ref_{B}) de la ressource d'exécution de destination (ResX, B), et une représentation sérialisée (r0, r1, r2...) de l'objet projetable ;
- une étape de réception, de la structure de données de résultats d'exécution (ExObj, diff) sous la forme d'un tableau comprenant, pour chaque objet projetable de la structure de données de transmission (PCP, heap) préalablement transmise, un index (0, 1, 2,...) et une représentation sérialisée (r'0, r'1, ...) des modifications effectuées par ladite au moins une fonction exécutée par la ressource d'exécution de destination (ResX, B).

Ainsi, il est possible de suivre l'évolution (les modifications) réalisée sur les données, indépendamment de la structuration des données transmises, tout en conservant l'indexation effectuée en entré du processus lors de la création des données à destination de la ressource d'exécution de destination.

Selon une caractéristique particulière, l'étape d'intégration de résultats d'exécution de la structure de données de résultats d'exécution (ExObj, diff) au sein de la ressource appelante comprend :
- une étape de mise à jour, au sein de la ressource appelante (ResA, A), d'une liste d'objets, la mise à jour comprenant une création d'un nouvel objet lorsque qu'un objet absent de la structure de données de transmission a été créé par la ressource d'exécution de destination au cours de l'exécution (50) ;
- une étape de mise à jour des valeurs des objets de la liste d'objets, comprenant une vérification de la cohérence des valeurs à mettre à jour en fonction des valeurs d'origine contenues dans la structure de données de transmission.

Ainsi, on rend possible la vérification de la préservation de la sémantique, tant sur le code que les données transmises et retournées par la ressource d'exécution de destination.

Selon une caractéristique particulière, l'étape de modification du code source scripté, délivrant un code scripté d'exécution comprenant ledit ensemble d'objets projetables, en fonction de ladite au moins une fonction projetable préalablement déterminée comprend :
- une étape de détermination d'au moins un contexte d'exécution de ladite application, en fonction du code source scripté (CSSE), ledit contexte d'exécution de ladite application comprenant, pour chaque variable et/ou objet du code source scripté (CSSE), une représentation d'une variable et/ou objet correspondant, accessible et/ou modifiable lors de la projection vers une ressource d'exécution de destination, ledit contexte d'exécution tenant compte de la portée de chaque variable et/ou objet du code source scripté (CSSE) ;
- une étape de construction du code scripté (PCP) en fonction du code source scripté (CSSE) et dudit contexte d'exécution préalablement déterminé.

Ainsi, on assure que le code projeté vers la ressource d'exécution de destination peut s'exécuter avec un contexte identique à celui de la ressource locale. Au final, cela permet d'assurer un fonctionnement plus efficace des codes projetés, en minimisant les éventuelles opérations d'invalidation d'exécution.

Il est entendu, dans le cadre de la description de la présente technique selon l'invention, qu'une étape de transmission d'une information et/ou d'un message d'un premier dispositif à un deuxième dispositif, correspond au moins partiellement, pour ce deuxième dispositif à une étape de réception de l'information et/ou du message transmis, que cette réception et cette transmission soit directe ou qu'elle s'effectue par l'intermédiaire d'autres dispositifs de transport, de passerelle ou d'intermédiation, y inclus les dispositifs décrits dans la présente selon l'invention.

Selon un autre aspect, l'invention se rapporte également à un dispositif électronique d'exécution d'un code scripté, appelé ressource appelante. Un tel dispositif comprend :
- des moyens d'obtention du code scripté comprenant un ensemble d'objets projetables, un objet projetable de l'ensemble d'objets projetables comprenant au moins une fonction exécutable auprès d'une ressource d'exécution de destination ;
- des moyens de préparation d'une structure de données de transmission d'au moins un objet projetable dudit code scripté préalablement obtenu, ladite structure de données de transmission associant à chaque objet du code scripté, au moins une donnée d'indexation ;
- des moyens de transmission à une ressource d'exécution de destination, de la structure de données de transmission du code scripté; et
- des moyens de réception d'une structure de données de résultats d'exécution, mis en oeuvre postérieurement à l'exécution, par la ressource d'exécution de destination, de la structure de données de transmission ;
- des moyens d'intégration de résultats d'exécution de la structure de données de résultats d'exécution.

L'invention se rapporte également, selon un aspect complémentaire, à un système d'exécution d'un code scripté. Un tel système comprend au moins une ressource appelante prenant la forme d'un dispositif électronique d'exécution tel que décrit précédemment et au moins une ressource distante, prenant la forme d'une ressource d'exécution de code scripté accessible depuis la ressource appelante.

Selon une implémentation préférée, les différentes étapes des procédés selon l'invention sont mises en oeuvre par un ou plusieurs logiciels ou programmes d'ordinateur, comprenant des instructions logicielles destinées à être exécutées par un processeur de données d'un dispositif d'exécution selon l'invention et étant conçu pour commander l'exécution des différentes étapes des procédés, mis en oeuvre au niveau du terminal de communication, du dispositif électronique d'exécution et/ou du serveur distant, dans le cadre d'une répartition des traitements à effectuer et déterminés par un codes source scripté.

En conséquence, l'invention vise aussi des programmes, susceptibles d'être exécutés par un ordinateur ou par un processeur de données, ces programmes comportant des instructions pour commander l'exécution des étapes des procédés tel que mentionnés ci-dessus.

Un programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur ou un SSD.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, *etc.*) et est susceptible d'accéder aux ressources matérielles de cette entité physique (mémoires, supports d'enregistrement, bus de communication, cartes électroniques d'entrées/sorties, interfaces utilisateur, *etc*.)*.*

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 décrit un système dans lequel l'invention est mise en oeuvre ;
- la figure 2 décrit une situation de perte de correspondance entre objets pour l'exécution déportée d'un code scripté ;
- la figure 3 décrit un mode de réalisation spécifique du procédé de traitement de code scripté;
- la figure 4 illustre la problématique de portée des variables au sein d'un code scripté;
- la figure 5 illustre une architecture d'une ressource appelante apte à mettre en oeuvre un procédé de traitement de l'invention ;
- la figure 6 illustre une architecture d'une ressource d'exécution de destination apte à mettre en oeuvre un procédé de traitement de l'invention.

### 5. Description

### 5.1. Exposé des principes techniques

Comme indiqué précédemment, un objet de l'invention est de permettre une utilisation efficace de ressources d'exécutions disponibles au sein d'une infrastructures, dans le cadre d'exécution de programmes scriptés par un interpréteur ou une machine virtuelle. Plus particulièrement, l'invention rend possible l'exécution, à distance ou localement, dans une pluralité de flots d'exécution (un flot d'exécution faisant partie du groupe comprenant un thread processeur, un processeur, un coeur de processeur, un thread de langage scripté, un contexte d'exécution d'une séquence d'instructions), d'une ou plusieurs portions d'applications. Ainsi, l'invention permet une intégration dynamique de ressources d'exécution (serveurs, ordinateurs personnels, smartphones et tablettes) et l'allocation dynamique de portions d'applications aux ressources d'exécution nouvellement intégrées.

L'invention apporte une solution simple et efficace aux problématiques précédemment mentionnées. Notamment, dans le cadre d'un environnement mono-serveur, l'invention offre la possibilité d'utiliser de manière automatique, l'intégralité des ressources disponibles au sein de ce serveur (en utilisant l'intégralité des coeurs de processeurs disponibles). L'identification des portions de code à distribuer est quant à elle soit automatique, soit manuelle. Dans le cadre d'une utilisation multiserveurs, l'invention permet de distribuer des portions de codes exécutables entre plusieurs serveurs afin de mettre en oeuvre les ressources d'exécution disponibles au sein de ces serveurs. En troisième lieu, l'invention permet également de distribuer de portions de codes exécutables sur différents dispositifs (ordinateurs personnels, tablettes, smartphones) connectés par l'intermédiaire d'un ou plusieurs réseaux de communication.

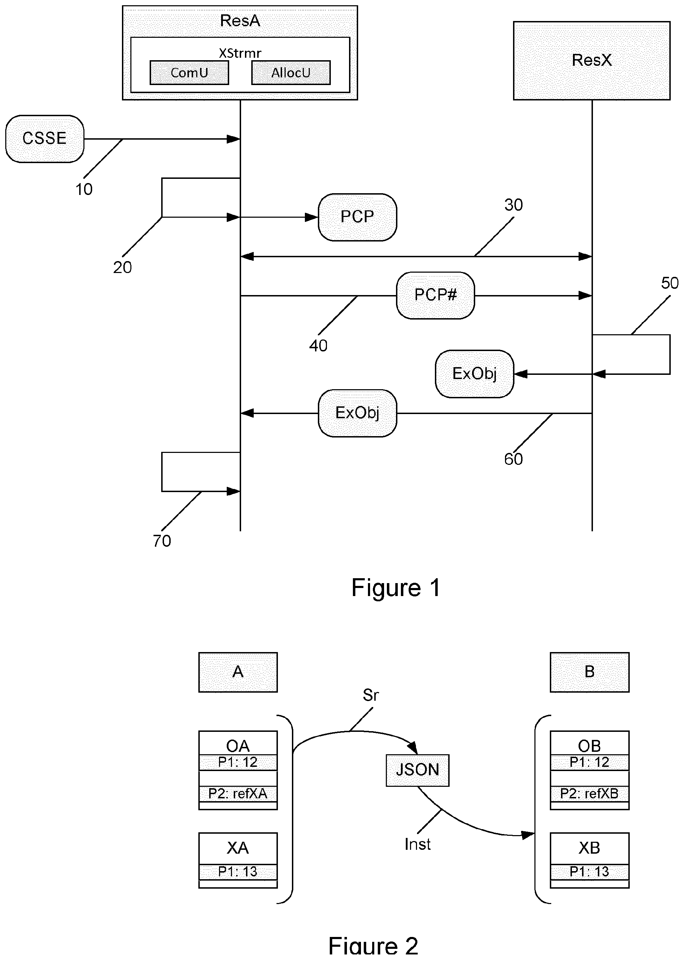

Pour ce faire, l'invention est basée sur la mise en oeuvre d'un module logiciel spécifique, lequel est utilisé en mode supervisé ou en mode pair à pair. Dans le mode de réalisation décrit par la suite, le mode supervisé est détaillé. On décrit, en relation avec la figure 1, une mise en oeuvre générale d'un traitement de code scripté implémentant la technique de l'invention. Le module logiciel spécifique (XStrmr), qui s'exécute sur une ressource appelante (ResA), comprend une unité de compilation (ComU) et une unité d'allocation (AllocU).

Ce module logiciel (XStrmr) :
- Prend (10) en entrée un code source scripté à exécuter (CSSE) ;
- Analyse (20) le code source scripté à exécuter (CSSE) et recherche et/ou construit des portions de code projetables (PCP) qui peuvent faire l'objet d'une projection à destination d'une ressource d'exécution destinatrice (ResX) (dispositif séparé ou coeur spécifique d'un dispositif d'exécution multicoeurs); ces deux premières étapes sont mises en oeuvre par l'unité de compilation (ComU)
- Identifie (30) une ou plusieurs ressources d'exécution (ResX) aptes à exécuter les portions de code projetables (PCP) ;
- lorsque les portions de codes et les ressources disponibles sont identifiées (et/ou construites), il projette (40) ces portions de code projetables (PCP), vers une ou plusieurs ressources d'exécution (ResX) préalablement identifiées ;
   - Les ressources identifiées implémentent elles-mêmes une pluralité des fonctions précédemment décrites, et donc une portion au moins du module logiciel (XStrmr) décrit, voire l'intégralité de celui-ci ;
- Les ressources d'exécution (ResX) exécutent (50) les portions de code projetées (PCP) ;
- Les résultats d'exécution (ExObj) de ces portions de codes (PCP) par les ressources disponibles sont transmis (60) au module logiciel appelant (XStrmr) ;
- Le module logiciel appelant (XStrmr) traite (70) les résultats reçus.

Ces cinq dernières étapes sont mises en oeuvre par l'unité d'allocation (AllocU).

Les flots d'exécutions sont initialisés avant la transmission des portions de code projetables. Cela signifie que lorsqu'une portion de code projetable est transmise, un flot d'exécution apte à exécuter ce code projetable a déjà été initialisé.

Ainsi, d'une manière générale, la ressource appelante est à même de décomposer et/ou modifier (automatiquement ou pas) l'application d'origine, en portions (morceaux) exécutables indépendamment, puis est à même de transmettre ces portions (et leur contexte d'exécution) à une ressource identifiée, laquelle exécute cette portion, à l'aide du contexte transmis, et renvoie le résultat à la ressource appelante pour traitement. Plus particulièrement, selon l'invention, on met notamment en oeuvre *une méthode de gestion des flots d'exécution,* méthode qui comprend un processus de sauvegarde de la portion de code (avant sa transmission à la ressource destinatrice) et un processus de gestion des portées (de variables notamment, également appelé processus de gestion des scopes) et ce afin d'assurer une cohérence d'exécution du code dans la ressource destinatrice. Ces deux processus permettent de certifier que les portions de codes exécutées par la ressource distante préservent la sémantique, tant sur le code que les données (et donc qu'ils fournissent un résultat qui est identique à celui qui aurait été obtenu si ces portions avaient été exécutées par la ressource appelante).

Plus précisément, *la méthode de gestion de flots d'exécution* est mise en oeuvre, au sein du module logiciel précédemment présenté, à l'aide des unités de compilations et des unités d'allocations. Cette méthode de gestion de flots d'exécution permet de conserver, dans les différents flots créés pour la projection des portions de code, un référentiel d'exécution unifié, lequel est utilisé pour assurer une unicité de l'exécution. En d'autres termes, selon l'invention, l'exécution des différentes portions de codes projetées dans les flots d'exécution parallélisés est transparente pour l'application. Cette dernière ne sait pas qu'elle fait l'objet d'une décomposition en plusieurs portions exécutées indépendamment par différentes ressources, au sein de différents flots d'exécution : de son point de vue, tout se déroule comme si le traitement avait été réalisé au sein d'un seul et unique flot d'exécution. Cela est avantageux à plus d'un titre. Notamment, n'importe quelle application peut être exécutée par le module logiciel objet de la présente technique. Il n'est notamment pas nécessaire de d'écrire l'application de manière spécifique. Une interface d'aide à la décomposition peut être mise en oeuvre ultérieurement afin de guider les décompositions. Cependant, le développeur se contente d'écrire l'application comme il le souhaite, en fonction des exigences qui lui sont propre. Le module logiciel analyse le code de l'application, en fonction de paramètres d'analyse spécifique et détermine seul les portions de code (fonctions, procédure, modules) à projeter dans des flots d'exécution parallèles. Le développeur n'a pas à apprendre une interface ou à développer selon une façon précise.

En d'autres termes, afin de 'paralléliser' un programme, lors du chargement du programme, l'unité de compilation identifie (et/ou construit) les fonctions potentiellement parallélisables et génère les instrumentations nécessaires afin qu'elles puissent être soumise à l'unité d'allocation.

Pour l'exécution l'unité d'allocation s'appuie sur trois blocs fonctionnels (ces blocs pouvant potentiellement être intégrés au sein d'un seul et même programme) : **service, master** et **runner.** Un **runner** matérialise les flots. Le **master** la stratégie de placement de fonctions projetables. Le **service** fournit le code à exécuter dans le cluster.

Afin d'exécuter une fonction sur une ressource d'exécution de destination :
- le **service** est en charge du début et de la fin de l'exécution des fonctions projetables. Pour l'exécution, il définit un travail (job) qui contient les données nécessaires à l'exécution de la fonction (paramètre d'entrée, scope d'exécution, système objet sérialisé, code de la fonction) sous la forme d'une structure de données de transport et la transmet au **master.**
- le **master** est en charge du placement des différents travaux (jobs) sur les **runners.** Il gère une queue d'attente et d'exécution des fonctions projetables (transportées).
- un **runner** permet d'exécuter un ou plusieurs jobs en parallèles sur une ressource (par exemple un nodejs, ou un navigateur, un serveur, un cluster, etc.).
- une fois la fonction exécutée, le **runner** effectue un travail de différentiation, ajoute les paramètres de sortie et communique au **master** la fin de l'exécution du job (le travail de différentiation est notamment effectué à l'aide d'une structure de donnée de différentiation comme cela est explicité par la suite en lien avec un mode de réalisation).
- le **master** retire de la file d'exécution de job et indique au **service** qu'il est terminé ;
- le **service** valide les propriétés ACID (à moins qu'elles ne s'appliquent pas), les propriétés d'ordre et met à jour l'espace des objets.

Un mode de réalisation spécifique de la technique proposé est décrit par la suite en lien avec le langage scripté « javascript ». Il est bien entendu que ce mode de réalisation dans le cadre du langage javascript est présenté à titre d'exemple et qu'il n'est nullement limitatif de la technique en elle-même, qui peut d'une manière générale être mise en oeuvre dans tout langage scripté ou interprétable, tels PHP, ou encore du bytecode (java ou autre).

D'une manière générale, selon l'invention, le code scripté est découpé/modifié/structuré, en une ou plusieurs passes, par l'unité de compilation du module logiciel. Une fois structuré en portions de code projetable, l'unité d'allocation du module logiciel décide, à la volée, de l'exécution de portions de code à l'aide d'autres ressources disponibles. Ainsi, préalablement, on considère que le module logiciel est à même d'obtenir ou de détecter une ou plusieurs ressources disponibles, localement ou à distance. La manière dont cette détection est effectuée ne fait pas partie de l'objet de l'invention. La seule caractéristique importante étant qu'un serveur (par exemple la ressource locale) a connaissance des ressources disponibles.

Sur la base du code découpé en portions projetables et de la pluralité de ressources disponibles, le module logiciel :
identifie au moins une ressource d'exécution de destination ;
- définit localement une structure d'échange de données, cette structure d'échange comprenant au moins une liste de pointage et une liste d'objets ;
- sérialise la structure d'échange ;
- transmet la structure d'échange sérialisée à la ressource d'exécution de destination.
- traite les résultats reçus de la part de la ressource d'exécution de destination, ces résultats étant compris dans structure d'échange de données initiale, retransmise par la ressource d'exécution de destination, et une structure de différences, listant les modifications effectuées.

On note que les opérations précédemment définies, notamment l'opération d'identification de la ressource de destination peut être réalisée en amont, tout comme la définition de la structure de données d'échange.

En d'autres termes, la technique ci-dessus consiste en une modification de la sérialisation, laquelle ne consiste plus à transmettre les objets sérialisés tels quels, mais bien à transmettre une structure de données différente, issues des objets à transmettre, cette structure de données est construite par la ressource appelante, sur la base des objets (et fonctions) à projeter, puis est elle-même transmise à la ressource d'exécution de destination. La ressource d'exécution de destination créée l'ensemble des objets sur la base de cette structure de données projetée et met à jour cette structure projetée (lorsque les fonctions ou objets modifient des valeurs attachées) et créée une structure de données complémentaire de différence, qui dresse le bilan des données modifiées au cours de l'exécution des fonctions. Lorsque les traitements sont terminés, ces deux structures de données (la structure d'origine et la structure des différences), sont retournées à la ressource appelante, qui sur la base des modifications réalisées, effectue les mises à jour des objets (et le leurs données) pour refléter l'exécution qui a eu lieu au sein de la ressource d'exécution de destination (lorsque certaines propriétés sont à respectées et sont respectées bien sûr, par exemple les propriété ACID, telles que décrites ci-dessous).

La structure de données est construite par exemple par sérialisation. La sérialisation permet de construire une structure de donnée indépendante machine transférable sur un protocole réseau et après la réception, réaliser une instanciation afin de reconstruire la structure de donnée d'origine

Selon la présente technique, les traitements de décomposition, identification, création, projection et traitement des résultats sont mis en oeuvre de manière itérative et/ou récursive tout au long de l'exécution de l'application.

### 5.2. Description d'un mode de réalisation

Dans ce mode de réalisation, on décrit l'implémentation des principes techniques précédemment décrit au langage javascript. Plus particulièrement, on décrit la manière dont on gère, pour le langage Javascript, les contextes d'exécution, la gestion de la portée, et la conservation des propriétés ACID du code exécuté.

### 5.2.1. Support d'exécution dans des flots différents

Les moteurs Javascript permettent la création de flot d'exécution isolés via des interfaces disponibles dans les navigateurs (par exemple les webworkers) ou dans Node.js (webworkers, child.spawn/fork). La méthode décrite ici permet de réaliser un appel de fonction depuis un flot d'exécution A dans un second flot d'exécution B qu'il soit local (sur le même ordinateur) ou distant (sur un autre ordinateur) tout en conservant un contexte d'exécution unifié. La méthode permet de fournir des fonctionnalités d'exécution déportée unifiée et ouvre le champ d'application de l'exécution distante à toute fonction et sans limitation.

### 5.2.1.1. Correspondance des systèmes objets

A la base, pour permettre une exécution unifiée, il est nécessaire de disposer d'une solution de suivi des modifications réalisées sur les objets par la fonction appelée et maintenir les systèmes objets du flot A et du flot B en correspondance.

Lorsqu'un flot Javascript A créé un flot B, les flots d'exécution sont isolés dans le sens ou, aucune propriété ou objets de A ne sont accessibles par B. Le seul moyen pour A de communiquer des propriétés ou des objets à B est d'utiliser un moyen de communication entre A et B (IPC). Les données transmises par A sont ainsi recopiées dans l'espace de B. B peut les utiliser comme bon lui semble car il n'y a pas de lien entre les données de A et les données de B. Réciproquement B peut utiliser un IPC pour communiquer à A des propriétés ou objets.

Afin de transmettre des objets, on effectue une sérialisation de ceux-ci, puis une fois reçus par le flot d'exécution destinataire, on en effectue une instanciation dans ce flot destinataire. Sur la figure 2, un flot A veut communiquer au flot B l'objet Oa, contenant les propriétés p1 (numérique 12) et p2 (une référence sur un objet Xa). Xa contenant une propriété p1 (numérique 13). La sérialisation (Sr) de l'objet Oa est effectuée, ainsi que celle de Xa (par exemple en utilisant l'appel JSON.stringify(Oa)). Une fois reçu, les objets sont instanciés (Inst) en Ob et Xb (par exemple en utilisant l'appel eval ou JSON.parse).

Il est intéressant de noter que cette façon de faire qui est utilisable en Javascript permet d'échanger des objets, mais elle a le désavantage majeur et limitatif de perdre la correspondance des objets entre les flots A et B. Par exemple, le flot B ne sait pas (n'a aucune connaissance du fait) que Ob correspond à Oa, et que Xb correspond à Xa.

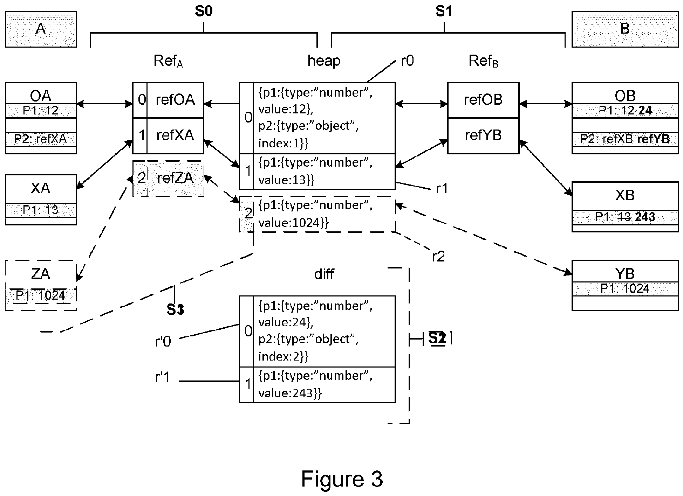

La technique mise en oeuvre par les inventeurs créée l'illusion que la fonction qui s'est exécutée dans le flot B s'est exécuté dans le flot A. Aussi il est possible de maintenir une équivalence des objets pour pouvoir mettre à jour les modifications des objets au sein des vrais objets du flot A. Pour ce faire les inventeurs ont défini une solution qui étend la sérialisation et l'instanciation afin de préserver ces liens. Cette solution comprend plusieurs étapes, illustrées en relation avec la figure 3. *Les éléments textuels de la* *figure 3* *ne constituent pas un texte, mais du code, et ne nécessitent donc pas de traduction.* En figure 3, on présente (à gauche l'état des objets dans le flot d'exécution A.

**L'étape 0 (50)** consiste en une extension de la sérialisation :
- Pour chaque objet, un indice (Oa-> 0 et Xa->1) est attribué ;
- Un tableau **ref_{A}** enregistre (sauvegarde) la référence de l'objet (ref[0] = refOa et ref[1] = refXa)
- Un autre tableau **heap_{A}** enregistre (sauvegarde) le contenu de chaque objet, et si c'est un autre objet l'indice de cet objet (**heap_{A}**[0]={p1:{type:"number", value:12}, p2:{type:"object", index:1}} et **heap_{A}**[1] = {p1:{type:"number", value:13}}
Ainsi **ref_{A}** [0] et **heap_{A}**[0] sont associés à **Oa** et **ref_{A}** [1] et **heap_{A}**[1] sont associés à **Xa.** Lors de la communication (sérialisation) effectuée entre A et B, seul **heap_{A}** est transmis. Sur la figure, le tableau **heap** n'est représenté qu'une seule fois pour plus de clarté dans la présentation.

**L'étape 1 (51)** correspond à l'étape d'instanciation des objets au sein du flot B. Sur B :
- **ref_{B}** est mis à vide (**ref_{B}**=[]), puis le **heap_{A}** reçu (qui devient donc **heap_{B}** du point de vue du flot B) est parcouru pour tous les éléments. Pour chaque élément un nouvel objet est instancié et la référence est stocké dans l'index correspondant dans **ref_{B}**.
Ainsi, après instanciation, le contenu du tableau **ref_{B}** du flot B permet de faire une correspondance avec le contenu de **ref_{A}** du flot A (on sait par exemple que **ref_{B}**[1] sur B désigne **ref_{A}**[1] sur A).

A ce stade, le flot B est en mesure d'exécuter une ou plusieurs fonctions présentes au sein des objets Ob ou Xb. Ces fonctions, pour l'exemple décrit ici lisent et/ou modifient les nouveaux objets (Ob, Xb) et paramètres instanciés. Par exemple, le flot B change Ob.p1 de la valeur 12 à la valeur 24 et associe à Ob.p2 un nouvel objet Yb. Par ailleurs Xb.p1 est modifié de la valeur 13 à la valeur 243. Pour ce faire, le flot B utilise le **heap** reçu de la part de A. Soit A a supprimé le **heap** de son côté, soit A a conservé le **heap** de son côté, en fonctions des conditions de mise en oeuvre opérationnelles.

**L'étape 2 (S2)** réalise un calcul des différences (suite à l'exécution des fonctions) :
Une fois la ou les fonctions exécutées, il est possible de parcourir le tableau **ref_{B}** et de vérifier grâce à la **heap_{B}** si une propriété d'un l'objet (Ob, Xb) a changé ou pas. Lors de ce parcours on **crée** ainsi un tableau **diff_{B}** qui contiend la liste des différences. Dans le cas d'un changement vers un nouvel objet, un nouvel indice est créé dans **heap_{B}** afin de matérialiser le nouvel objet. Le tableau **diff_{B}** contient ainsi pour l'objet 0 la nouvelle valeur pour p1 (c'est-à-dire 24) et le nouvel index (2) de l'objet créé dans **heap_{B}** pour p2 (refYb). Il contiendra aussi la nouvelle valeur de la propriété p1 de Xb (à savoir 243).

A supposer que Ob contienne une autre propriété (p3) et que sa valeur est inchangée, elle ne sera pas décrite dans le tableau **diff_{B}.** Le tableau **diff_{B}** ne contient que les modifications sur les objets (ajout d'objet, modification d'objet (modification d'une propriété, suppression ou ajout d'une propriété).

Une fois le calcul des différences et la mise à jour de **heap_{B}** réalisée, **diff_{B}** et **heap_{B}** sont transmis au flot A (c'est-à-dire qu'il est sérialisé et transmis au flot appelant A). On peut également ne transmettre **diff_{B}** que et se contenter de conserver **heap_{A}** sur la ressource appelante (c'est-à-dire qu'on ne retransmet pas **heap_{B}** en même temps que **diff_{B}** à la fin de l'exécution sur le flot B, on ne retransmet que **diff_{B}** : cela allège les transmissions, mais cela met une pression mémoire plus importante sur la ressource appelante).

**L'étape 3 (53)** instanciation des nouveaux objets sur A :
Lors de la réception de **diff_{B},** A **(Etape 3)** instancie tous les nouveaux objets insérés dans **heap_{A},** et ajoute les références dans le tableau **ref_{A}**.
Les propriété ACID des objets peuvent être vérifiées à l'issue de cette instanciation (voir ci-après) ;
**L'étape 4 (non représentée)** mise à jour des objets sur A :
Dernière étape à l'aide du tableau diff, A met à jour le contenu des objets de A.

Comme indiqué sur le schéma, l'ensemble des objets ont été reconstruits entre A et B et les modifications ont été reportées dans l'espace objet de A.

Notons que les étapes 0, 1, 2, 3 et 4 s'exécute respectivement au sein des flots A, B, B, A, et A et que pendant ces étapes rien d'autre ne peut s'exécuter au sein de ces flots. Notons également que si l'objet Xa est accédé par un autre objet autre que Oa, la nouvelle valeur de Xa a été propagée. Si Xa n'était que référencé par Oa, alors suite à la mise à jour il sera collecté par le ramasse miette de la machine virtuelle.

### 5.2.1.2. Appels effectifs des fonctions

Grâce au procédé décrit ci-avant, les inventeurs ont le moyen de maintenir les équivalences des systèmes objets entre deux flots, ce qui n'était pas possible précédemment.

Afin de réaliser l'appel de fonction, l'ensemble des paramètres d'entrée de la fonction est sérialisé. Puis une fois exécutée, des paramètres de sortie sont ajoutés dans la sérialisation, selon le même mécanisme. Il est ainsi possible d'appeler une fonction tout en maintenant les objets liés aux paramètres d'entrée et de sortie.

### 5.2.1.3. Gestion des scopes

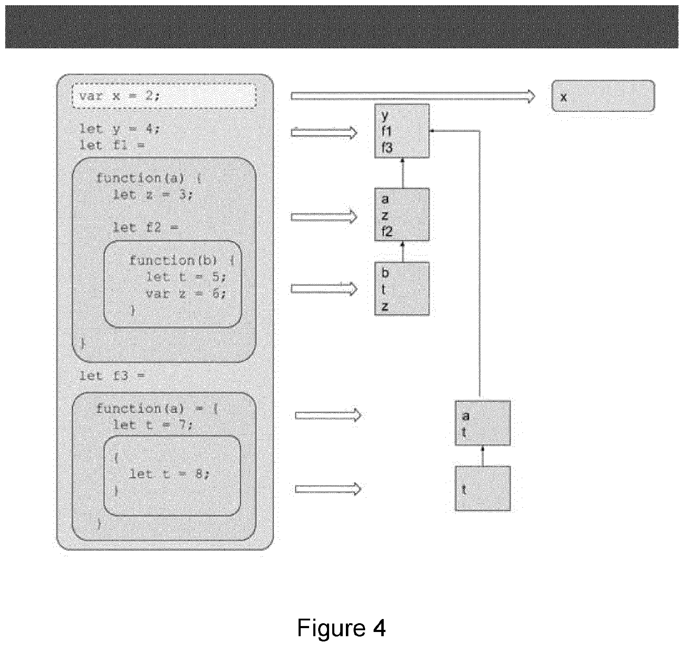

En dehors des paramètres, une fonction peut avoir besoin d'accéder à des propriétés/objets accessibles dans son scope (dans sa portée), c'est-à-dire des propriétés/objets, qui bien que n'étant pas définis au sein d'un objet à transmettre à la ressource d'exécution de destination, sont tout de même accessibles dans le code scripté initial. C'est par exemple le cas de variables globales, de variables ou de propriétés d'un niveau précédent ou encore d'objets parents (lors d'héritage d'objets par exemple). Ainsi, un problème à résoudre pour pouvoir effectuer un transfert vers un autre flot est également de pouvoir effectuer un transfert de contexte d'exécution, le contexte comprenant l'ensemble des propriétés/objets auxquels la fonction a accès durant son exécution. La détermination de ce contexte est effectuée en amont, c'est-à-dire avant le transfert vers la ressource d'exécution de destination, normalement par l'unité fonctionnelle de compilation. Le contexte créé fait partie des objets qui sont sérialisés et transmis par la méthode de transmission précédemment décrite. La figure 4 illustre la problématique des scopes (portées d'exécution). On comprend que si l'on souhaite transmettre, à une ressource d'exécution de destination, l'exécution de f2 et de f3, la transmission correcte du contexte d'exécution est essentielle. Notamment, par exemple, le scope de f3 est différent du scope de f2, malgré le fait que ces deux fonctions f2 et f3 définissent une variable nommée t dont le scope est limité. Il ne faut donc pas par exemple que les scopes de f2 et f3 entrent en collision.

Ainsi, afin de transmettre le contexte de l'environnement à un appel de fonction distant, deux possibilités de traitement des scopes sont possibles : soit être en phase d'exécution pour pouvoir accéder à l'environnement et le transmettre directement, ou réécrire le code scripté d'une certaine manière.

Une première solution consiste à simuler le contexte Javascript.

Dans cette première solution, afin de transmettre le contexte sans l'aide de l'interpréteur (par exemple sans l'aide du moteur JavaScript), il est nécessaire de créer le contexte dans le langage choisi (par exemple en Javascript). Pour cela, il est nécessaire de connaître toutes les portées de variables, de chaînes de portées et tous les accès au contexte. Pour pouvoir le faire, nous devons exclure toute portée dynamique, c'est-à-dire l'utilisation de mots clés du style «with» et «eval», et donc être dans une portée purement lexicale. La méthode de création comprend :
- La construction de la chaîne de scope associée à chaque scope dans le programme ;
- La séparation du programme en deux ensembles de scopes, l'un pour le scope des fonctions qui vont être exécutées à distance (remote) et l'autre pour le reste du programme (résident) ;
- Optionnellement, supprimer, dans les scopes résidents, toutes les liaisons de variable qui ne sont pas utilisées dans une fonction distante ;
- Optionnellement, fusionner certains scopes en renommant un nom de liaison ou de variable en conflit (par exemple, pour ne conserver qu'un scope unique par fonction)
- Transformer le programme comme suit :
   - Lorsque le scope global est créé, créer un objet vide et placer cet objet comme contexte courant dans l'objet 'global' (dans la suite, nommons le 'global.currentContext') pour être accessible de tout le programme ; ;
   - Chaque fois qu'un scope est créé, générez un objet vide, ajoutez lui une propriété symbolique 'parent' qui pointe sur le context pointé par 'global.currentContext', et mettez cette objet comme contexte courant dans l'objet 'global' (global.currentContext).
   - Chaque fois qu'un scope est détruit, faire pointer le 'global.currentScope' sur l'objet pointé par 'globa.currentScope.parent'. Ainsi, une pile dynamique de contextes dont le haut est à tout moment pointé par 'global.currentContext' est créée et mise à jour durant l'exécution du programme ;
   - A chaque fois qu'une fonction 'f' est définie :
      a. ajouter une propriété symbolique f.context pointant sur le contexte actuel pointé par 'global.currentContext' (f est l'objet fonction) ;
      b. ajouter dans l'objet context pointé par 'global.currentContext' tous les paramètres de la fonction (le nom du paramètre devenant le nom d'une propriété, et sa valeur, la valeur de cette propriété) ; ;
   - Remplacez tous les accès à une variable v incluse dans un scope résident dans une fonction f :
      a. Si l'étape 4 (optimisation optionnelle) est appliquée, recherchez le nom de la liaison correspondant à la variable v (appelons la w) ;
      b. Si l'étape 4 n'est pas appliquée, w = v ;
      c. Remplacer l'accès à la variable v par un accès à f.context.w.

En utilisant cette première solution, consistant à réécrire le code et définir un contexte de transmission qui est associés aux différents scopes, transmettre et exécuter une fonction auprès d'une ressource d'exécution de destination est aisé : il suffit de transmettre l'objet fonction, qui contient tout le contexte d'exécution de cette fonction par l'intermédiaire de sa propriété symbolic 'context'.

Une deuxième solution consiste à capturer le contexte et à le falsifier.

Pour pouvoir mettre en oeuvre cette solution, nous devons exclure toute portée dynamique, c'est-à-dire l'utilisation de mots clés «with» et «eval», et donc être dans une portée purement lexicale.
1. Construire la chaîne de scope associée à chaque scope dans le programme. Marquez la liaison avec un attribut constant pour les variables déclarées avec *const* et marquez la liaison avec un attribut tdz (zone morte temporelle) pour les variables déclarées avec *const* ou *let* et qui peuvent se retrouver dans une zone morte temporelle. Pour ces derniers, nous pouvons également fixer le moment exact où la liaison n'est sûrement pas dans la zone morte temporelle, mais nous décrirons cela plus tard comme une optimisation.
2. Pour chaque fonction, diviser le programme en deux ensembles de scopes, un pour le scope des fonctions que vous voulez exécuter à distance (distant) et un pour le reste du programme (résident).
3. De manière optimisée et optionnelle, parcourir le code de la fonction que nous voulons exécuter à distance pour marquer chaque liaison dont la fonction a besoin dans le scope résident.
4. Pour chaque fonction que nous voulons exécuter à distance :
   a. Ajouter une fonction qui capture le contexte dans un objet de contexte avec les variables provenant d'une liaison marquée à l'étape 3 (ou toutes les variables du scope résident si pas d'étape 3).
      i. Construire un objet contextuel, avec (I) un identifiant définissant la configuration de la variable Temporal Dead Zone, (II) une liste de noms de variables dans la Temporal Dead Zone, (III) deux objets vides, un pour contenir les variables non mutables (*const*)*,* et un autre pour les variables mutables (*var, let, function et class*)*.*
      ii. Placez une propriété par variable, le nom de la propriété est le nom de la variable et l'emplacement de la propriété dépend du type de la variable (un des deux objets définit en i.II : mutable ou non mutable). La valeur de la propriété est la valeur de la variable.
      iii. Afin de gérer la zone morte temporelle, nous devons « try/catch » chaque accès aux variables potentiellement dans la Temporal Dead Zone au cas où ces variables seraient réellement dans la Temporal Dead Zone. Dans ce cas, nous devons simplement insérer le nom de la variable dans le tableau de la Temporal Dead Zone (i.I). Nous devons également calculer un identifiant qui identifie la configuration des variables de la Temporal Dead Zone en définissant un bit dans l'identifiant représentant cette variable.
   b. Ajouter une fonction qui met à jour le contexte à partir de l'objet « context » en écrivant les variables provenant d'une liaison marquée à l'étape 3 (ou toutes les variables du scope résident si pas d'étape 3) . Dans le cas d'une variable potentiellement dans la Temporal Dead Zone, nous devons tester si elle était effectivement dans Temporal Dead Zone de l'objet contexte, en testant le bit id, et dans le cas contraire, mettre à jour le contexte avec la valeur provenant de l'objet contexte.
   c. Lier ces deux nouvelles fonctions dans l'objet fonction en utilisant des propriétés nommées avec soin (comme "captureContext" et "updateContext") ou en utilisant un symbole.
   d. On peut imaginer l'ajout d'une troisième fonction utilisant les deux premières fonctions, qui réalise l'appel distant avec un mécanisme spécifique (capture de contexte, appel distant avec ce contexte, mise à jour du contexte).
5. Remplacer la fonction dans la partie distante par une fonction qui :
   a. Prend un objet de contexte comme argument.
   b. Créé toutes les variables nécessaires avec leur valeur initiale contenue dans l'objet context. Si la variable est dans l'ensemble non mutable, utiliser *const* pour la déclarer. Si la variable est dans le *mutable (read*/*write),* utilisez let.
   c. Exécute (ou appelle) le code original dans un bloc *try.*
   d. Créée toutes les variables nécessaires dans la Temporal Dead Zone avec le l*et.*
   e. Met à jour l'objet *context* avec la valeur provenant du contexte dans le bloc *finally* correspondant au bloc try. Ignorer simplement la variable dans la zone morte temporelle ou dans la section r (read).

Un certain nombre d'alternatives peuvent être imaginées à l'aide de fonctions utilitaires, Ici aussi, la transformation doit être prudente vis-à-vis des conflits de noms avec ses propres variables, mais la transformation a la connaissance de tous les scopes, et peut donc facilement éviter les conflits.

Pour projeter l'exécution d'une fonction avec cette alternative, le programme devra obtenir l'objet context de la fonction à projeter en appelant la fonction pointée par la propriété captureUpdate de cette même fonction. Il devra alors sérialiser ce object context avec le même mécanisme que précédemment décrit. Au retour de l'exécution de cette fonction, le programme devra mettre à jour le context grâce à l'objet context provenant de la désérialisation qu'il passera à la fonction pointée par la propriété updateContext de cette même fonction.

### 5.2.1.4. Cohérence des objets, exécution ACID d'une fonction, exécution ordonnée

Dans le cas précédemment décrit, une fonction exécutée dans un autre flot d'exécution (sur une ressource d'exécution de destination) modifie les objets passés en paramètres. Compte tenu du fait que cette fonction peut s'exécuter de façon asynchrone et parallèle, le flot d'exécution A (ressource appelante) ou un autre flot d'exécution (autre ressource d'exécution de destination) peut pendant ce temps modifier les mêmes objets. Ceci n'est pas possible dans un système javascript standard dans lequel toutes les fonctions s'exécutent dans le même flot. Afin de maintenir la cohérence des objets, par défaut les fonctions doivent préserver les propriétés ACID (Atomicité, Cohérence, Isolation et Durabilité). Les inventeurs ont donc développé une technique de conservation de ces propriétés ACID. Ainsi, afin d'exécuter une propriété ACID de la fonction une validation différentielle est effectuée, qui consiste notamment à vérifier que :
- les paramètres d'entrée de la fonction et les objets liés n'ont pas étés modifiés (sur A) depuis le début d'exécution de la fonction ;
- les variables scopées et les objets liés sont inchangés (sur A).

Pour ce faire on réutilise **l'étape 2 (S2)** décrite précédemment, mais appliquée sur le flot A. Si le tableau diff_{A} est vide, alors aucune modification n'a été apportée pendant l'exécution de la fonction on procède au commit (la validation) de la fonction et on met à jour le système objet du flot A **(étapes 3 (S3) et 4).** Si le tableau diff_{A} n'est pas vide alors on invalide la fonction exécutée par la ressource d'exécution de destination : on ne propage pas les mises à jour des paramètres et objets et on exécute la fonction à nouveau.

Grâce à cette validation différentielle, il est possible d'exécuter de façon asynchrone et parallèle, une fonction, dans un autre flot, tout en maintenant son exécution cohérente dans l'application initiale. Par ailleurs notons que le fait d'exécuter à nouveaux la fonction de façon asynchrone ne pose pas de problème car la fonction à exécuter est elle-même asynchrone.

Une autre propriété à respecter est la relation d'ordre d'exécution asynchrone qui est définie par *setImmediate* uniquement.

Par exemple la séquence suivante :
setImmediate(f1), setImmediate(f2), setlmmediate(f3)

Présuppose que f1 sera exécutée avant f2, et que f2 sera exécutée avant f3. Aussi, dans le cas d'une exécution déportée, comme décrite précédemment, si f2 ou f3 se termine avant f1, il est nécessaire d'attendre la validation (le commit) de f1 avant de faire le commit de f2, puis de f3. Auquel cas, la méthode permet d'identifier ces cas de figure en réalisant une passe spécifique à ces aspects lors de la décomposition du code source scripté. Par ailleurs, lors de l'exécution, on effectue un séquencement des validations (commits) dans l'ordre d'activation et/ou on invalide/léexécute si besoin les fonctions invalidées.

Ci-dessous un exemple simple montrant l'utilisation de cette relation d'ordre. La relation d'ordre est nécessaire afin d'obtenir le bon résultat induit par la causalité des variables du code.

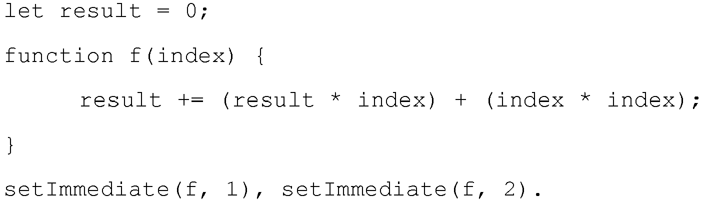

Dans cet exemple si l'ordre est respecté le résultat vaut 7 ; si l'ordre n'est pas respecté il vaut 9.

Dans le cas de cet exemple, d'une part le compilateur (l'unité de compilation) peut éviter de dissocier l'exécution de ces fonction et d'autre part l'unité d'allocation, si elle agit indépendamment de l'unité de compilation peut décider de ne pas transporter l'exécution de ces fonctions dans une ressource d'exécution de destination.

En fonction des modes de réalisation, pour les développeurs, il est possible de fournir une solution de traitement des décompositions qui soient personnalisables, par exemple par l'intermédiaire d'une interface de programmation (API) spécifique.

D'un point de vue développeur, il est possible d'offrir le moyen d'exécuter une fonction de façon asynchrone avec ou sans garantie ACID, avec ou sans garantie d'ordre. Cette dernière appelant un handler de fin.

Il est également possible de fournir le même support en créant une promesses qui permettra de réaliser un point de synchronisation simple dans le code (f(params).then()), ou l'utilisation de await dans des fonctions async de plus haut niveau.

### 5.3. Autres caractéristiques et avantages

Afin qu'elle soit efficace, la technique précédemment décrite doit permettre de transporter l'exécution d'une quantité importante de fonctions. Grâce à la technique des inventeurs, Potentiellement, toute fonction asynchrone est projetable/déportable. Cela peut être :
- des fonctions qui sont déclenchées sur événement (par exemple les .on('event', f), ou les setTimeOut ou setlmmediate ;
- des fonctions async ;
- des fonctions exécutées dans des webworkers.

Concernant d'autres séquences de code synchrones, elles sont également projetable/déportable en fonction de leurs données utilisées. Par exemple, dans une séquence synchrone on a un comportement suivant dans le code Javascript :
- *FA* - travail sur un ensemble de données *A* et production de *A'* ;
- *FB* - travail sur un ensemble de données *B* et production de *B'* ;
- *FC -* travail sur un ensemble de données *C* et production de *C';*
- Suite - on continue le code.

Il est aisé de comprendre que si *A, A' B, B', C* et *C*' sont des objets/propriétés différentes, alors *FA, FB* et *FC* sont projetable/déportables et qu'il suffit de créer un point de synchronisation avant que Suite ne s'exécute il n'y a pas de problème sur l'exécution. Ainsi le travail sur des boucles dont les fonctions travaillant sur des objets/propriétés disjointes sont ainsi projetable/déportables.

Dès lors, ce code

```
 let samples = [...];
 let out = [];
 for (let index = 0; index < samples.length; index++) {
       out[index] = workOn(samples[index]);
 }
```

Pourra se transformer en une séquence projetable et parallélisable. De même, la fonction Map définie dans javascript l'est également. let **newArr** = **oldArr**.map ((**val, index, arr**) => {

```
 // return élément to new Array
 });
 Également :
 f(..) {
       Préambule...
       //
       ... travail sur un set de donnée A
       //
       //
       ... travail sur un set de donnée B
       //
       Suite...
       }
```

Une transformation de code permettant de créer par exemple des promesses peut être utilisée. L'unité de compilation génère ces transformations en s'appuyant sur la propriété ACID et d'ordre d'exécution du des fonctions. Par exemple :

```
 f(..) {
       Préambule...
       async function mf() {
               async function dA() {
                       //travail sur un set de donnée A
               }
               async function dB() {
                       //travail sur un set de donnée B
               }
               let odA = dA();
               let odB = dB();
               await odA;
               await odB;
       }
      mf().then(function () {
               // Suite...
       });
       }
```

### 1.4. Systèmes et dispositifs de mise en oeuvre

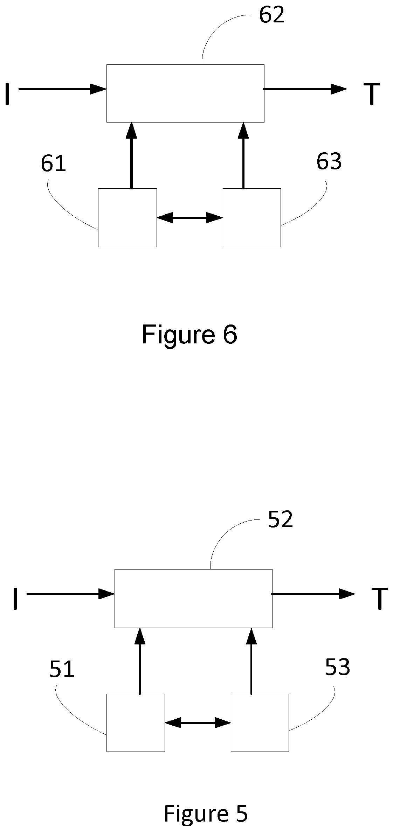

On présente, en relation avec la figure 5, une architecture simplifiée d'un dispositif électronique d'exécution apte à effectuer le traitement et l'exécution d'un code scripté. Un dispositif électronique d'exécution comprend une mémoire 51, une unité de traitement 52 équipée par exemple d'un microprocesseur, et pilotée par le programme d'ordinateur 53, mettant en oeuvre le procédé tel que précédemment décrit. Dans au moins un mode de réalisation, l'invention est mise en oeuvre sous la forme d'une application installée sur ce dispositif. Un tel dispositif comprend :
- des moyens d'obtention du code scripté comprenant un ensemble d'objets projetables, un objet projetable de l'ensemble d'objets projetables comprenant au moins une fonction exécutable auprès d'une ressource d'exécution de destination ;
- des moyens de préparation d'une structure de données de transmission d'au moins un objet projetable dudit code scripté préalablement obtenu, ladite structure de données de transmission associant à chaque objet du code scripté, au moins une donnée d'indexation ;
- des moyens de transmission à une ressource d'exécution de destination, de la structure de données de transmission du code scripté; *et*
- des moyens de réception d'une structure de données de résultats d'exécution, mis en oeuvre postérieurement à l'exécution, par la ressource d'exécution de destination, de la structure de données de transmission ;
- des moyens d'intégration de résultats d'exécution de la structure de données de résultats d'exécution.

On présente, en relation avec la figure 6, une architecture simplifiée d'un dispositif électronique d'exécution, également appelée ressource d'exécution de destination apte à effectuer des transactions à l'aide d'une empreinte contextuelle. Un tel dispositif électronique d'exécution, comprend une mémoire 61, une unité de traitement 62 équipée par exemple d'un microprocesseur, et pilotée par le programme d'ordinateur 63, mettant en oeuvre le procédé selon l'invention. Dans au moins un mode de réalisation, l'invention est mise en oeuvre sous la forme d'une application installée sur un dispositif électronique d'exécution accessible par une ressource appelante. Un tel dispositif électronique d'exécution comprend :
- des moyens de réception, de la structure de données de transmission du code scripté; *et*
- des moyens d'exécution du code scripté résultant de l'instanciation, sous la forme d'objets projetables, de la structure de données reçue, et des moyens de traçage des résultats d'exécution d'au moins une fonction contenue dans ces objets ;
- des moyens de préparation d'une structure de données de résultats d'exécution dudit au moins un objet projetable dudit code scripté préalablement exécuté, ladite structure de données de résultats d'exécution associant à chaque objet du code scripté modifié, au moins une donnée d'indexation ;
- des moyens de transmission à une ressource d'exécution locale, de la structure de données de de résultats d'exécution du code scripté;
Ces moyens se présentent sous la forme d'une application logicielle spécifique, ou encore sous la forme de composants matériels dédiés. Plus particulièrement, dans au moins un mode de réalisation, ces moyens se présentent sous la forme de plusieurs composants matériels auxquels sont adjoint plusieurs composants logiciels.

## Revendications

1. Procédé d'exécution d'un code scripté d'une application, procédé mis en oeuvre par l'intermédiaire d'un dispositif électronique, appelé ressource appelante (ResA, A), au sein de laquelle ladite application est exécutable, le procédé comprenant :
- une étape d'obtention (20) du code scripté de l'application (PCP) comprenant un ensemble d'objets projetables (OA, XA, ZA), un objet projetable de l'ensemble d'objets projetables comprenant au moins une fonction exécutable auprès d'une ressource d'exécution de destination (resX, B) ;
- une étape de préparation d'un tableau d'indexation (ref_{A}), ledit tableau d'indexation listant les objets projetables à transmettre à une ressource d'exécution de destination (ResX, B), tableau au sein duquel un index (0, 1, ...) est associé à une référence d'objet (RefOA, RefXA,...) pour former au moins une donnée d'indexation d'objet et une étape de création d'une structure de données de transmission (PCP#, heap) d'au moins un objet projetable dudit code scripté préalablement obtenu, ladite structure ayant la forme d'un tableau comprenant, pour chaque objet projetable, un index (0, 1, ...), correspondant à l'index (0, 1, ...) de la référence de cet objet projetable au sein du tableau d'indexation (ref_{A}), et une représentation sérialisée (r0, r1, ...) de l'objet projetable ;
- une étape de transmission (40), à une ressource d'exécution de destination, de la structure de données de transmission (PCP#, heap) du code scripté; *et*
postérieurement à l'exécution (50), par la ressource d'exécution de destination, d'au moins une fonction dudit au moins un objet projetable de la structure de données de transmission :
- une étape de réception (60) d'une structure de données (ExObj, diff) de résultats d'exécution de ladite au moins une fonction, ladite structure de données comprenant ladite au moins une donnée d'indexation d'objet projeté ;
- une étape d'intégration de résultats d'exécution de la structure de données de résultats d'exécution (ExObj, diff) au sein de la ressource appelante, comprenant une mise à jour d'objet projetables en fonction de la ladite au moins une donnée d'indexation, ladite étape d'intégration comprenant :
- une étape de mise à jour, au sein de la ressource appelante (ResA, A), de l'ensemble d'objets projetables, ladite mise à jour comprenant une création d'un nouvel objet projetable lorsque qu'un objet projetable absent de la structure de données de transmission (PCP#, heap) a été créé par la ressource d'exécution de destination au cours de l'exécution (50) ;
- une étape de mise à jour de valeurs des objets projetables de l'ensemble d'objets projetables, ladite étape comprenant une vérification d'une cohérence de valeurs à mettre à jour en fonction de valeurs d'origine contenues dans la structure de données de transmission (PCP#, heap).

2. Procédé selon la revendication 1, **caractérisé en ce que** l'étape d'intégration de résultats d'exécution de la structure de données de résultats d'exécution au sein de la ressource appelante comprend une vérification différentielle de l'intégrité des données mise à jour au cours de l'exécution (50), par la ressource d'exécution de destination.

3. Procédé d'exécution d'un code scripté selon la revendication 1, **caractérisé en ce que** l'étape d'obtention du code scripté de l'application (PCP) comprend :
- une étape d'obtention (10) d'un code source scripté (CSSE), représentatif de l'application à exécuter par la ressource appelante (ResA, A) ;
- une étape de détermination, au sein du code source scripté (CSSE), d'au moins une fonction susceptible d'être exécutée par une ressource d'exécution de destination, dite fonction projetable ;
- une étape de modification du code source scripté (CSSE) en fonction de ladite au moins une fonction projetable préalablement déterminée pour délivrer ledit code scripté de l'application (PCP).

4. Procédé d'exécution d'un code scripté selon la revendication 1, **caractérisé en ce que** l'étape de réception d'une structure de données de résultats (ExObj, diff) d'exécution de ladite au moins une fonction comprend :
- une étape de réception, de la structure de données de transmission (PCP#, heap) préalablement transmise, sous la forme d'un tableau comprenant, pour chaque objet projetable, un index (0, 1, 2,...), correspondant à l'index (0, 1, 2,...) de la référence de cet objet projetable au sein d'un tableau d'indexation (ref_{B}) de la ressource d'exécution de destination (ResX, B), et une représentation sérialisée (r0, r1, r2...) de l'objet projetable ;
- une étape de réception, de la structure de données de résultats d'exécution (ExObj, diff) sous la forme d'un tableau comprenant, pour chaque objet projetable de la structure de données de transmission (PCP, heap) préalablement transmise, un index (0, 1, 2,...) et et une représentation sérialisée (r'0, r'1, ...) des modifications effectuées par ladite au moins une fonction exécutée par la ressource d'exécution de destination (ResX, B).

5. Procédé d'exécution d'un code scripté selon la revendication 3, **caractérisé en ce que** l'étape de modification du code source scripté (CSSE) comprend :
- une étape de détermination d'au moins un contexte d'exécution de ladite application, en fonction du code source scripté (CSSE), ledit contexte d'exécution de ladite application comprenant, pour chaque variable et/ou objet du code source scripté (CSSE), une représentation d'une variable et/ou objet correspondant, accessible et/ou modifiable lors de la projection vers une ressource d'exécution de destination, ledit contexte d'exécution tenant compte de la portée de chaque variable et/ou objet du code source scripté (CSSE) ;
- une étape de construction du code scripté de l'application (PCP) en fonction du code source scripté (CSSE) et dudit contexte d'exécution préalablement déterminé.

6. Dispositif électronique d'exécution d'un code scripté, appelé ressource appelante, le dispositif comprenant :
- des moyens d'obtention du code scripté comprenant un ensemble d'objets projetables (OA, XA, ZA), un objet projetable de l'ensemble d'objets projetables comprenant au moins une fonction exécutable auprès d'une ressource d'exécution de destination ;
- des moyens de préparation d'un tableau d'indexation (ref_{A}), ledit tableau d'indexation listant les objets projetables à transmettre à une ressource d'exécution de destination (ResX, B), tableau au sein duquel un index (0, 1, ...) est associé à une référence d'objet (RefOA, RefXA,...) pour former au moins une donnée d'indexation d'objet et des moyens de création d'une structure de données de transmission (PCP#, heap) d'au moins un objet projetable dudit code scripté préalablement obtenu, ladite structure ayant la forme d'un tableau comprenant, pour chaque objet projetable, un index (0, 1, ...), correspondant à l'index (0, 1, ...) de la référence de cet objet projetable au sein du tableau d'indexation (ref_{A}), et une représentation sérialisée (r0, r1, ...) de l'objet projetable ;
- des moyens de transmission à une ressource d'exécution de destination, de la structure de données de transmission du code scripté; *et*
- des moyens de réception d'une structure de données de résultats d'exécution, mis en oeuvre postérieurement à l'exécution, par la ressource d'exécution de destination, de la structure de données de transmission, ladite structure de données comprenant ladite au moins une donnée d'indexation d'objet projeté ;
- des moyens d'intégration de résultats d'exécution de la structure de données de résultats d'exécution, comprenant une mise à jour d'objet projetables en fonction de la ladite au moins une donnée d'indexation, lesdits moyens d'intégration comprenant :
- des moyens de mise à jour, au sein de la ressource appelante (ResA, A), de l'ensemble d'objets projetables, ladite mise à jour comprenant une création d'un nouvel objet projetable lorsque qu'un objet projetable absent de la structure de données de transmission (PCP#, heap) a été créé par la ressource d'exécution de destination au cours de l'exécution (50) ;
- des moyens de mise à jour de valeurs des objets projetables de l'ensemble d'objets projetables, ladite étape comprenant une vérification d'une cohérence de valeurs à mettre à jour en fonction de valeurs d'origine contenues dans la structure de données de transmission (PCP#, heap).

7. Système d'exécution d'un code scripté, **caractérisé en ce qu'**il comprend au moins une ressource appelante prenant la forme d'un dispositif électronique d'exécution selon la revendication 6 et au moins une ressource distante, prenant la forme d'une ressource d'exécution de code scripté accessible depuis la ressource appelante.

8. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé selon la revendication 1, lorsqu'il est exécuté sur un ordinateur.

## Patentansprüche

1. Verfahren zur Ausführung eines Skriptcodes einer Anwendung, wobei das Verfahren von einer elektronischen Vorrichtung, anrufende Ressource (ResA, A) genannt, umgesetzt wird, in der die Anwendung ausführbar ist, wobei das Verfahren umfasst:
- einen Schritt des Erhalts (20) des Skriptcodes der Anwendung (PCP), umfassend eine Gesamtheit von projizierbaren Objekten (OA, XA, ZA), wobei ein projizierbares Objekt der Gesamtheit von projizierbaren Objekten mindestens eine bei einer Bestimmungs-Ausführungsressource ausführbare Funktion (resX, B) umfasst;
- einen Schritt der Vorbereitung einer Indexierungstabelle (ref_{A}), wobei die Indexierungstabelle die projizierbaren Objekte, die an eine Bestimmungs-Ausführungsressource (ResX, B) zu übertragen sind, auflistet, wobei in der Tabelle ein Index (0, 1, ...) einer Objektreferenz (RefOA, RefXA, ...) zugeordnet wird, um mindestens ein Indexierungsdatum eines Objekts zu bilden, und einen Schritt der Schaffung einer Struktur von Übertragungsdaten (PCP#, heap) mindestens eines projizierbaren Objekts des vorher erhaltenen Skriptcodes, wobei die Struktur die Form einer Tabelle hat, umfassend für jedes projizierbare Objekt einen Index (0, 1, ...), der dem Index (0, 1, ...) der Referenz dieses projizierbaren Objekts in der Indexierungstabelle (ref_{A}) entspricht, und eine serielle Darstellung (r0, r1, ...) des projizierbaren Objekts;
- einen Schritt der Übertragung (40) der Übertragungsdatenstruktur (PCP#, heap) des Skriptcodes an eine Bestimmungs-Ausführungsressource; und nach der Ausführung (50) mindestens einer Funktion des mindestens einen projizierbaren Objekts der Übertragungsdatenstruktur durch die Bestimmungs-Ausführungsressource:
- einen Schritt des Empfangs (60) einer Datenstruktur (ExObj, diff) von Ausführungsresultaten der mindestens einen Funktion, wobei die Datenstruktur das mindestens eine Indexierungsdatum eines projizierten Objekts umfasst;
- einen Schritt der Integration von Ausführungsresultaten der Datenstruktur von Ausführungsresultaten (ExObj, diff) in der anrufenden Ressource, umfassend eine Aktualisierung von projizierbaren Objekten in Abhängigkeit von dem mindestens einen Indexierungsdatum, wobei der Integrationsschritt umfasst:
- einen Schritt der Aktualisierung der Gesamtheit von projizierbaren Objekten in der anrufenden Ressource (ResA, A), wobei die Aktualisierung eine Schaffung eines neuen projizierbaren Objekts umfasst, wenn ein fehlendes projizierbares Objekt der Übertragungsdatenstruktur (PCP#, heap) von der Bestimmungs-Ausführungsressource während der Ausführung (50) geschaffen wurde;
- einen Schritt der Aktualisierung von Werten der projizierbaren Objekte der Gesamtheit von projizierbaren Objekten, wobei der Schritt eine Überprüfung einer Kohärenz von zu aktualisierenden Werten in Abhängigkeit von Ausgangswerten, die in der Übertragungsdatenstruktur (PCP#, heap) enthalten sind, umfasst.

2. Verfahren nach Anspruch 1, **dadurch gekennzeichnet, dass** der Schritt der Integration von Ausführungsresultaten der Datenstruktur von Ausführungsresultaten in der anrufenden Ressource eine differentielle Überprüfung der Integrität der Daten, die während der Ausführung (50) von der Bestimmungs-Ausführungsressource aktualisierten wurde, umfasst.

3. Verfahren zur Ausführung eines Skriptcodes nach Anspruch 1, **dadurch gekennzeichnet, dass** der Schritt des Erhalts des Skriptcodes der Anwendung (PCP) umfasst:
- einen Schritt des Erhalts (10) eines Quellenskriptcodes (CSSE), der für die von der anrufenden Ressource (ResA, A) auszuführende Anwendung repräsentativ ist;
- einen Schritt der Bestimmung mindestens einer Funktion in dem Quellenskriptcode (CSSE), die geeignet ist, von einer Bestimmungs-Ausführungsressource ausgeführt zu werden, projizierbare Funktion genannt;
- einen Schritt der Änderung des Quellenskriptcodes (CSSE) in Abhängigkeit von der mindestens einen vorher bestimmten projizierbaren Funktion, um den Skriptcode der Anwendung (PCP) zu liefern.

4. Verfahren zur Ausführung eines Skriptcodes nach Anspruch 1, **dadurch gekennzeichnet, dass** der Schritt des Empfangs einer Datenstruktur von Ausführungsresultaten (ExObj, diff) der mindestens einen Funktion umfasst:
- einen Schritt des Empfangs der vorher übertragenen Übertragungsdatenstruktur (PCP#, heap) in Form einer Tabelle, umfassend für jedes projizierbare Objekt einen Index (0, 1, 2, ...) entsprechend dem Index (0, 1, 2, ...) der Referenz dieses projizierbaren Objekts in einer Indexierungstabelle (ref_{B}) der Bestimmungs-Ausführungsressource (ResX, B) und eine serielle Darstellung (r0, r1, r2, ...) des projizierbaren Objekts;
- einen Schritt des Empfangs der Datenstruktur von Ausführungsresultaten (ExObj, diff) in Form einer Tabelle, umfassend für jedes projizierbare Objekt der vorher übertragenen Übertragungsdatenstruktur (PCP, heap) einen Index (0, 1, 2, ...) und eine serielle Darstellung (r'0, r'1, ...) der Änderungen, die von der mindestens einen von der Bestimmungs-Ausführungsressource (ResX, B) ausgeführten Funktion durchgeführt wurden.

5. Verfahren zur Ausführung eines Skriptcodes nach Anspruch 3, **dadurch gekennzeichnet, dass** der Schritt der Änderung des Quellenskriptcodes (CSSE) umfasst:
- einen Schritt der Bestimmung mindestens eines Ausführungskontextes der Anwendung in Abhängigkeit von dem Quellenskriptcode (CSSE), wobei der Ausführungskontext der Anwendung für jede Variable und/oder jedes Objekt des Quellenskriptcodes (CSSE) eine Darstellung einer entsprechenden Variablen und/oder eines entsprechenden Objekts umfasst, die(der) bei der Projektion zu einer Bestimmungs-Ausführungsressource zugänglich und/oder änderbar ist, wobei der Ausführungskontext die Reichweite jeder Variablen und/oder jedes Objekts des Quellenskriptcodes (CSSE) berücksichtigt;
- einen Schritt der Konstruktion des Skriptcodes der Anwendung (PCP) in Abhängigkeit von dem Quellenskriptcode (CSSE) und dem vorher bestimmten Ausführungskontext.

6. Elektronische Vorrichtung zur Ausführung eines Skriptcodes, anrufende Ressource genannt, wobei die Vorrichtung umfasst:
- Mittel zum Erhalt des Skriptcodes, umfassend eine Gesamtheit von projizierbaren Objekten (OA, XA, ZA), wobei ein projizierbares Objekt der Gesamtheit von projizierbaren Objekten mindestens eine bei einer Bestimmungs-Ausführungsressource ausführbare Funktion umfasst;
- Mittel zur Vorbereitung einer Indexierungstabelle (ref_{A}), wobei die Indexierungstabelle die projizierbaren Objekte, die an eine Bestimmungs-Ausführungsressource (ResX, B) zu übertragen sind, auflistet, wobei in der Tabelle ein Index (0, 1, ...) einer Objektreferenz (RefOA, RefXA, ...) zugeordnet wird, um mindestens ein Indexierungsdatum eines Objekts zu bilden, und Mittel zur Schaffung einer Struktur von Übertragungsdaten (PCP#, heap) mindestens eines projizierbaren Objekts des vorher erhaltenen Skriptcodes, wobei die Struktur die Form einer Tabelle hat, umfassend für jedes projizierbare Objekt einen Index (0, 1, ...), der dem Index (0, 1, ...) der Referenz dieses projizierbaren Objekts in der Indexierungstabelle (ref_{A}) entspricht, und eine serielle Darstellung (r0, r1, ...) des projizierbaren Objekts;
- Mittel zur Übertragung der Übertragungsdatenstruktur des Skriptcodes an eine Bestimmungs-Ausführungsressource; und
- Mittel zum Empfang einer Datenstruktur von Ausführungsresultaten, die nach der Ausführung der Übertragungsdatenstruktur durch die Bestimmungs-Ausführungsressource eingesetzt werden, wobei die Datenstruktur das mindestens eine Indexierungsdatum eines projizierten Objekts umfasst;
- Mittel zur Integration von Ausführungsresultaten der Datenstruktur von Ausführungsresultaten, umfassend eine Aktualisierung von projizierbaren Objekten in Abhängigkeit von dem mindestens einen Indexierungsdatum, wobei die Integrationsmittel umfassen:
- Mittel zur Aktualisierung der Gesamtheit von projizierbaren Objekten in der anrufenden Ressource (ResA, A), wobei die Aktualisierung eine Schaffung eines neuen projizierbaren Objekts umfasst, wenn ein fehlendes projizierbares Objekt der Übertragungsdatenstruktur (PCP#, heap) von der Bestimmungs-Ausführungsressource während der Ausführung (50) geschaffen wurde;
- Mittel zur Aktualisierung von Werten der projizierbaren Objekte der Gesamtheit von projizierbaren Objekten, wobei der Schritt eine Überprüfung einer Kohärenz von zu aktualisierenden Werten in Abhängigkeit von Ausgangswerten, die in der Übertragungsdatenstruktur (PCP#, heap) enthalten sind, umfasst.

7. System zur Ausführung eines Skriptcodes, **dadurch gekennzeichnet, dass** es mindestens eine anrufende Ressource, die die Form einer elektronischen Ausführungsvorrichtung nach Anspruch 6 annimmt, und mindestens eine entfernte Ressource umfasst, die die Form einer Ausführungsressource eines Skriptcodes, die von der anrufenden Ressource zugänglich ist, annimmt.

8. Computerprogrammprodukt, das von einem Kommunikationsnetz heruntergeladen und/oder auf einem von einem Computer lesbaren Speicher gespeichert und/oder von einem Mikroprozessor ausgeführt werden kann, **dadurch gekennzeichnet, dass** es Programmcodebefehle für die Ausführung eines Verfahrens nach Anspruch 1 umfasst, wenn es auf einem Computer ausgeführt wird.

## Claims

1. A method for executing a script code of an application, the method being implemented via an electronic device, named calling resource (ResA, A), within which said application is executable, the method comprising:
- a step of obtaining (20) the script code of the application (PCP) comprising a set of projectable objects (OA, XA, ZA), a projectable object of the set of projectable objects comprising at least one function executable before a destination execution resource (resX, B);
- a step of preparing an indexing table (ref_{A}), said indexing table listing the projectable objects to be transmitted to a destination execution resource (ResX, B), within which table an index (0, 1, ...) is associated to an object reference (RefOA, RefXA, ...) in order to form at least one object indexing datum and a step of generating a transmission data structure (PCP#, heap) of at least one projectable object of said script code obtained beforehand, said structure being in the form of a table comprising, for each projectable object, an index (0, 1, ...), corresponding to the index (0, 1, ...) of the reference of this projectable object within the indexing table (ref_{A}) and a serialised representation (r0, r1, ...) of the projectable object;
- a step of transmitting (40), to a destination execution resource, the transmission data structure (PCP#, heap) of the script code; *and*
subsequently to the execution (50), by the destination execution resource, of at least one function of said at least one projectable object of the transmission data structure:
- a step of receiving (60) a data structure (ExObj, diff) of execution results of said at least one function, said data structure comprising said at least one projected object indexing datum;
- a step of integrating execution results of the execution results data structure (ExObj, diff) within the calling resource, comprising a projectable object update according to said at least one indexing datum, said step of integrating comprising:
- a step of updating, within the calling resource (ResA, A), the set of projectable objects, said updating comprising a creation of a new projectable object when a projectable object absent from the transmission data structure (PCP#, heap) has been created by the destination execution resource during the execution (50);
- a step of updating values of the projectable objects of the set of projectable objects, said step comprising a verification of a consistency of values to be updated according to original values contained in the transmission data structure (PCP#, heap).

2. The method according to claim 1, **characterised in that** the step of integrating execution results of the execution results data structure within the calling resource comprises a differential verification of the integrity of the data updated during the execution (50), by the destination execution resource.

3. The method for executing a script code according to claim 1, **characterised in that** the step of obtaining the script code of the application (PCP) comprises:
- a step of obtaining (10) a script source code (CSSE), representative of the application to be executed by the calling resource (ResA, A);
- a step of determining, within the script source code (CSSE), at least one function prone to be executed by a destination execution resource, called projectable function;
- a step of modifying the script source code (CSSE) according to said at least one projectable function determined beforehand in order to output said script code of the application (PCP).

4. The method for executing a script code according to claim 1, **characterised in that** the step of receiving a data structure of execution results (ExObj, diff) of said at least one function comprises:
- a step of receiving the transmission data structure (PCP#, heap) transmitted beforehand, in the form of a table comprising, for each projectable object, an index (0, 1, 2, ...), corresponding to the index (0, 1, 2, ...) of the reference of this projectable object within an indexing table (ref_{B}) of the destination execution resource (ResX, B), and a serialised representation (r0, r1, r2, ...) of the projectable object;
- a step of receiving the execution results data structure (ExObj, diff) in the form of a table comprising, for each projectable object of the transmission data structure (PCP, heap) transmitted beforehand, an index (0, 1, 2, ...) and a serialised representation (r'0, r'1, ...) of the modifications performed by said at least one function executed by the destination execution resource (ResX, B).

5. The method for executing a script code according to claim 3, **characterised in that** the step of modifying the script source code (CSSE) comprises:
- a step of determining at least one execution context of said application, according to the script source code (CSSE), said execution context of said application comprising, for each variable and/or object of the script source code (CSSE), a representation of a corresponding variable and/or object, accessible and/or modifiable during the projection towards a destination execution resource, said execution context taking into account the scope of each variable and/or object of the script source code (CSSE);
- a step of building the script code of the application (PCP) according to the script source code (CSSE) and to said execution context determined beforehand.

6. An electronic device for executing a script code, named calling resource, the device comprising:
- means for obtaining the script code comprising a set of projectable objects (OA, XA, ZA), a projectable object of the set of projectable objects comprising at least one function executable before a destination execution resource;
- means for preparing an indexing table (ref_{A}), said indexing table listing the projectable objects to be transmitted to a destination execution resource (ResX, B), within which table an index (0, 1, ...) is associated to an object reference (RefOA, RefXA, ...) in order to form at least one object indexing datum and means for generating a transmission data structure (PCP#, heap) of at least one projectable object of said script code obtained beforehand, said structure being in the form of a table comprising, for each projectable object, an index (0, 1, ...), corresponding to the index (0, 1, ...) of the reference of this projectable object within the indexing table (ref_{A}) and a serialised representation (r0, r1, ...) of the projectable object;
- means for transmitting to a destination execution resource, the transmission data structure of the script code; *and*
- means for receiving an execution results data structure, implemented subsequently to the execution, by the destination execution resource, of the transmission data structure, said data structure comprising said at least one projected object indexing datum;
- means for integrating execution results of the execution results data structure, comprising an update of projectable objects according to said at least one indexing datum, said integrating means comprising:
- means for updating, within the calling resource (ResA, A), the set of projectable objects, said updating comprising a creation of a new projectable object when a projectable object absent from the transmission data structure (PCP#, heap) has been created by the destination execution resource during the execution (50);
- means for updating values of the projectable objects of the set of projectable objects, said step comprising a verification of a consistency of values to be updated according to original values contained in the transmission data structure (PCP#, heap).

7. A system for executing a script code, **characterised in that** it comprises at least one calling resource in the form of an execution electronic device according to claim 6 and at least one remote resource, in the form of a script code execution resource accessible from the calling resource.

8. A computer program product downloadable from a communication network and/or stored on a computer-readable medium and/or executable by a microprocessor, **characterised in that** it comprises program code instructions for the execution of a method according to claim 1, when it is executed on a computer.
